Europäisches Patentamt

European Patent Office

Office européen des brevets

(11) Publication number: **0 442 393 A2**

# EUROPEAN PATENT APPLICATION

(21) Application number: 91101781.2

(22) Date of filing: 08.02.91

(51) Int. Cl.⁵: **G01B 11/24**

(30) Priority: **13.02.90 JP 12915/90 U**

(43) Date of publication of application:
**21.08.91 Bulletin 91/34**

(84) Designated Contracting States:
**DE ES FR GB IT NL SE**

(71) Applicant: **Katogh, Noboru**
**18-1, Tennoucho**
**Fukui-shi, Fukui-ken(JP)**

Applicant: **Nozaki, Youzo**
**1-7-20-112 Housaicho**
**Kanazawa-shi, Ishikawa-ken(JP)**

(72) Inventor: **Katogh, Noboru**
**18-1, Tennoucho**
**Fukui-shi, Fukui-ken(JP)**
Inventor: **Nozaki, Youzo**
**1-7-20-112 Housaicho**
**Kanazawa-shi, Ishikawa-ken(JP)**

(74) Representative: **Wächtershäuser, Günter, Dr.**
**Tal 29**
**W-8000 München 2(DE)**

(54) **Three-dimensional contour measuring apparatus.**

(57) A three-dimensional contour measuring apparatus having a pair of lasers spaced at a given constant interval. In order to determine degrees of deformation relative to the original contour requiring no base on which a traffic-damaged car is put in determining degrees of deformation, it has associated stepmotors to permit each laser to throw its beam of light towards a desired direction and means to control the elevation of these lasers. A triangle formed by the distance (base) between the opposite lasers and two distances (sides) extending from either laser to a selected point on an object is used to determine the coordinates of the selected point according to the triangulation.

## THREE-DIMENSIONAL CONTOUR MEASURING APPARATUS

The present invention relates to an apparatus for determining three-dimensional contour of an object, which is useful particularly in determining the degree of deformation in the shape of an automobile partly deformed by traffic accident.

The number of cars registered has been ever increasing, and accordingly the number of traffic accidents has been increasing. A lot of cars involved in traffic accidents are liable to be partly deformed, and accordingly reshaping works are increasing. Recently cars have been equipped with various functional units, and therefore the repair of an accident-damaged car requires tedious and time consuming work. Sometimes, complete repair is difficult, and inadequate repair may be a cause for involvement in another traffic accident because of insufficient performance of car equipments.

In an attempt to facilitate the complete repair of accident-damaged cars, an apparatus for determining three dimensional contour of a partly deformed car has been proposed. Such a contour determining apparatus must be laid in parallel relationship with the horizontal, flat floor surface, and therefore it is difficult to measure the underside of the car body, inconveniently requiring the use of a relatively large scale. Still inconveniently such conventional apparatus requires fixation equipment and completely flat floor. Also disadvantageously, such conventional measuring apparatus and accessories are so expensive that small-to-medium-sized repair firms, in fact, cannot afford such apparatus.

In view of the above, one object of the present invention is to provide a three-dimensional contour measuring apparatus which is simple in structure, and less expensive, and can be handled with ease.

The features of a three-dimensional contour measuring apparatus according to the present invention are as follows: it uses the straight linear projection of very narrow light beam from a laser. Two lasers are placed at a predetermined interval therebetween, and each laser can be made to turn about its horizontal and vertical axes so that a very narrow beam of intensive light may be thrown in a desired direction. Generally a stepmotor may be used to swivel each laser. The angular position of the laser can be determined by counting incremental steps which the stepmotor makes. The distance between the two lasers is used a base of a triangle, which is formed by the sides extending from the opposite ends of the base to a selected point of an object on which point the two beams of light are thrown by the lasers. The angles formed between the base and sides of the triangle can be determined by counting the incremental steps of the stepmotor. Then, the ordinates X, Y and Z of the selected point on the car can be determined relative to the position of the three-dimensional contour measuring apparatus according to the triangulation. The coordinates of the selected point on the car thus determined relative to the three-dimensional contour measuring apparatus can be easily converted to the coordinates relative to a selected origin in the car body. A plurality of selected points in the deformed part of the car body are located in the coordinate system of the car body.

The particulars of car dimensions are published by the car manufacturing company, and accordingly a plurality of selected major characteristic dimensions may be inputted in the three-dimensional contour measuring apparatus. The degrees of deformation can be easily determined by comparing the coordinates of selected points on the deformed part of the car body with the corresponding major characteristic dimensions thus stored in the three-dimensional contour measuring apparatus. If a narrow beam of light from either laser can reach short of some selected points on the car body, an auxiliary scale may be used.

Other objects and advantages of the present invention will be understood from the following description of a three-dimensional contour measuring apparatus according to one preferred embodiment of the present invention, which is shown in accompanying drawings.

Fig. 1 is a perspective view of the three-dimensional contour measuring apparatus;

Fig. 2 is a longitudinal section of a laser-driving mechanism in the three-dimensional contour measuring apparatus;

Fig. 3 is a cross section of the laser-driving mechanism taken along the line 3-3 in Fig. 2; and

Fig. 4 shows diagrammatically the manner in which the coordinates of selected points on a car body are determined by the three-dimensional contour measuring apparatus.

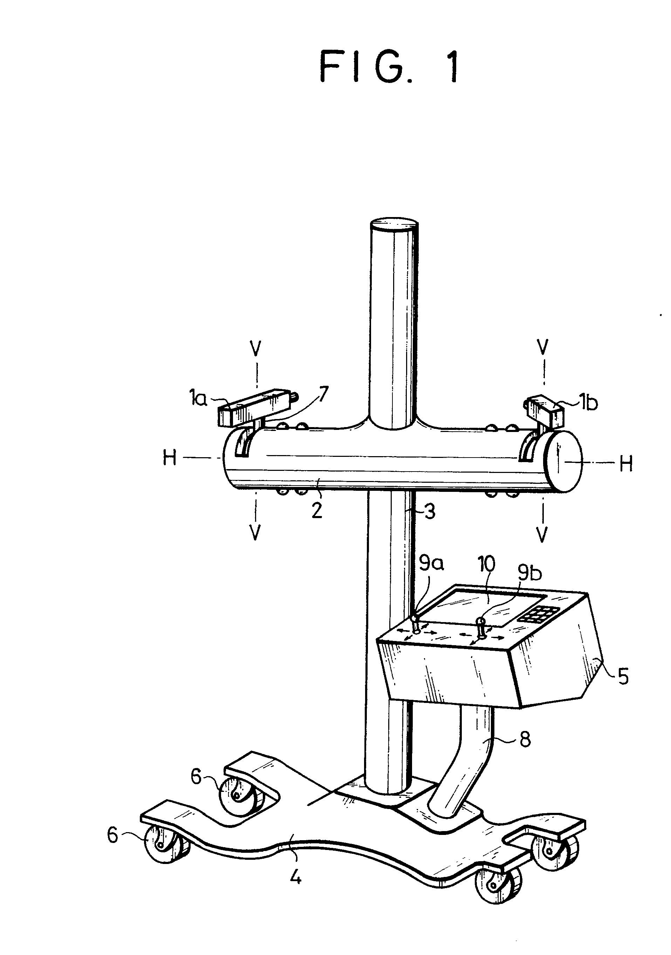

Referring to Fig. 1, a three-dimensional contour measuring apparatus comprises lasers 1a and 1b, lateral arm 2, vertical post 3, foot 4 and control panel 5. Foot 4 has rolls 6 on its four corners, permitting the apparatus to be carried easily. Vertical post 3 is fixed upright to foot 4. Lateral arm 2 extends from vertical post 3 in opposite directions, and lasers 1a and 1b are rotatably fixed to the opposite ends of lateral arm 2. Lasers 1a and 1b can rotate about their pivots 7, and can rotate about horizontal axis H - H orthogonal to vertical pivot axes 7. Stepmotors are used to make lasers 1a and 1b to turn a desired angular increments, thus permitting determination of angular positions of lasers 1a and 1b relative to a given reference position by counting the incremental steps of associated stepmotors. Also, lateral arm 2 is adapted to move up and down on vertical post 3. Elevation of lateral arm 2 may be adjusted manually because elevation control is not required every time a point is selected on the car body.

Another vertical post 8 is fixed to foot 4 to support control panel 5, which has control handles 9a and 9b for controlling movements of lasers 1a and 1b. These control handles are adapted to move right and left, and back and forth, causing lasers 1a and 1b to turn accordingly towards a desired direction. Control panel 5 has CRT 10 built therein to show the angular positions of lasers 1a and 1b relative to a given reference, the degrees of deformation which are determined from contour measurements by an associated computer, and other pieces of information. Fig. 1 shows control panel 5 as having control handles 9a and 9b. These control handles, however, may be separated from control panel 5, and may be attached to a separate control box which is designed to be carried by a mechanic, who often wants to have an access to the deformed part of the car body.

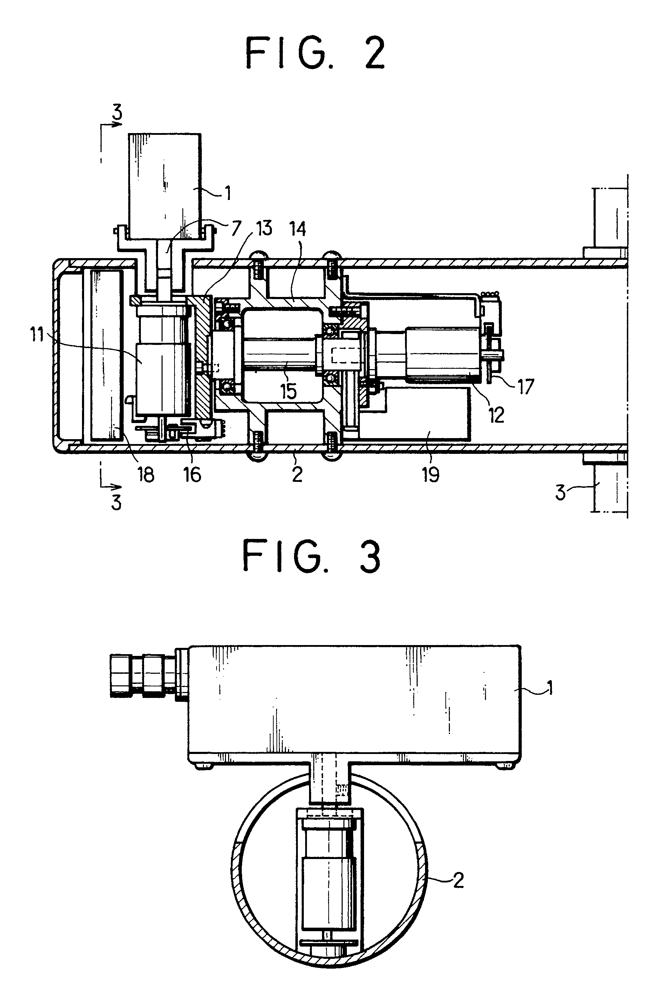

Referring to Figs. 2 and 3, one example of laser driving mechanism is shown as comprising stepmotors 11 and 12 equipped with reduction means in hollow lateral arm 2, permitting rotation of each laser about horizontal axis H - H and vertical axis V - V, which is orthogonal to the horizontal axis H - H. Specifically, stepmotor 11 is placed in vertical direction V - V with its shaft connected to the axle to which laser 1 is fixed in coaxial relation. Stepmotor 11 and laser 1 are attached to bracket 13, which is fixed to the end of rotary shaft 15. Rotary shaft 15 is rotatably fixed to support plate 14 via bearings. Support plate 14 is fixed to lateral arm 2. Rotary shaft 15 is connected to the shaft of another stepmotor 12 in coaxial relation. Stepmotor 12 is fixed to support plate 14.

With this arrangement rotation of stepmotor 12 will cause rotation about horizontal axis H - H of integration of bracket 13 and stepmotor 11 via rotary shaft 15 with the result that laser 1 may be inclined in a vertical plane. Rotation of stepmotor 11 will cause rotation of laser 1 about vertical axis V - V. The number of rotation each of stepmotors 11 and 12 will be determined by associated indexing plates 16 and 17. Counter weights 18 and 19 are used to balance the weight of laser 1 on lateral arm 2.

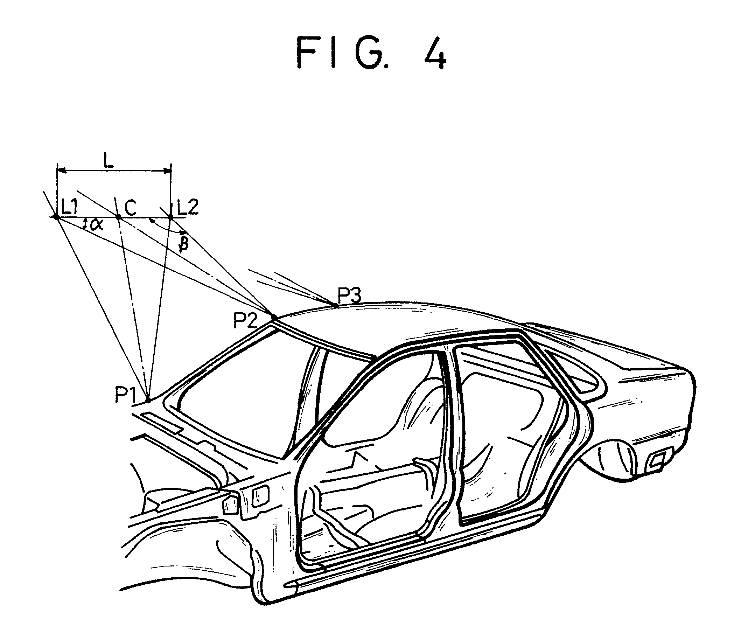

Referring to Fig. 4, lasers 1a and 1b are positioned at L1 and L2, throwing two narrow beams of intensive light to selected points P1, P2, P3 - - one after another. Arithmetic determination of the coordinates of these selected points can be made from the distance L between lasers 1a and 1b and the beam projection angles $\alpha$ and $\beta$ according to the principle of triangulation. Degrees of deformation on these selected points can be determined from the known coordinates of corresponding points of the correct contour of car body shape. Relative degrees of deformation can be determined relative to zero which is set for each corresponding standard point on the correct car contour. Also, absolute values of deformation can be determined to represent how far the selected point is from corresponding reference point on the correct car contour.

The coordinates of selected standard points on the correct car contour are determined easily from published data and are put in a memory. Then, amounts of deformation can be determined by comparing the coordinates of selected points on a deformed contour with those stored in the memory to present only the amounts of deformation on CRT 10. This permits a worker to continue repairing while measuring degrees of deformation. In other words, the worker can realize that repairing has been finished when the degrees of deformation of all selected points have been reduced to zero.

Sometimes, two or more three-dimensional contour measuring apparatuses may be used to cover a relatively expanded area of deformation. As a matter of course a single apparatus may be moved to two or more positions which are selected so as to cover the whole large area of deformation by sweeping from these positions with the two beams of intensive light, and data obtained at these different positions may be later combined. An auxiliary tool having a reflector on its end may be used to permit the two laser beams after reflection to reach a selected area which otherwise, these laser beams could not reach, such as a part of the backside of the chassis. Sometimes it may be necessary to raise the car body to permit projection of the two beams of light from lasers 1a and 1b on a selected point. Thanks to the possibility of the coordinates of selected points on a traffic-damaged car being determined relative to corresponding selected standard points on the correct contour, displacement of the car body will cause no trouble in measuring, as is contrary to a conventional three-dimensional contour measuring system which requires a flat reference base to determine the deformed contour.

As described above, a three-dimensional contour measuring apparatus according to the present invention uses a pair of lasers spaced at a given constant interval, associated stepmotors to permit each laser to throw its beam of light towards a desired direction and means to control the elevation of these lasers, thus providing following advantages:

1) A triangular which is formed by the distance (base) between the opposite lasers and two distances (sides) extending from either laser to a selected point can be used to determine the coordinates of a selected point according to the triangulation. The apparatus is simple in structure, compared with a conventional one, and the measurement is accurate.

2) Degrees of deformation can be determined relative to the original contour, thus requiring no base on which a traffic-damaged car is put in determining degrees of deformation, as is the case with a conventional three-dimensional contour measuring apparatus. Repairing can be continued without interrupting measuring. Displacement or raising of the car body will cause no influence on measurement.

## Claims

1. An apparatus for determining three-dimensional contour of an object comprising: a pair of lasers each being capable of projecting a very narrow beam of extremely intense light; means for rotating these lasers about a horizontal axis and a vertical axis which is orthogonal to said horizontal axis, thereby permitting each beam to be thrown on a selected point on said object, the laser rotating means including stepmotor means to change said lasers in direction, thereby permitting the angular change each of said lasers to be determined in terms of incremental steps; means for controlling the elevation of said lasers; and control panel having control handles for controlling the direction in which each of said lasers is directed.

2. An apparatus for determining three-dimensional contour of an object according to claim 1 wherein said control handles are separate from said control panel.

# FIG. 1

# FIG. 2

# FIG. 3

# FIG. 4